(19) **Europäisches Patentamt / European Patent Office / Office européen des brevets**

(11) **EP 4 564 815 A1**

(12) **EUROPEAN PATENT APPLICATION**
published in accordance with Art. 153(4) EPC

(43) Date of publication:
04.06.2025  Bulletin 2025/23

(51) International Patent Classification (IPC):
*H04N 19/124* (2014.01)    *H04N 19/14* (2014.01)
*H04N 19/182* (2014.01)

(21) Application number: 23862032.2

(22) Date of filing: 30.06.2023

(52) Cooperative Patent Classification (CPC):
H04N 19/124; H04N 19/14; H04N 19/182;
H04N 19/184; H04N 19/42

(86) International application number:
PCT/CN2023/105332

(87) International publication number:
WO 2024/051331 (14.03.2024 Gazette 2024/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.09.2022  CN 202211097271
28.12.2022  CN 202211696812

(71) Applicant: Huawei Technologies Co., Ltd.
Shenzhen, Guangdong 518129 (CN)

(72) Inventors:
• WANG, Danni
  Shenzhen, Guangdong 518129 (CN)
• YANG, Haitao
  Shenzhen, Guangdong 518129 (CN)
• LUO, Yi
  Shenzhen, Guangdong 518129 (CN)
• FENG, Junkai
  Shenzhen, Guangdong 518129 (CN)

(74) Representative: Pfenning, Meinig & Partner mbB
Patent- und Rechtsanwälte
Theresienhöhe 11a
80339 München (DE)

(54) **IMAGE ENCODING AND DECODING METHODS, APPARATUS, ENCODER, DECODER AND SYSTEM**

(57)    This application discloses an image encoding and decoding method and apparatus, an encoder, a decoder, and a system, and relates to the multimedia field. The method includes: determining an adjustment value of a number of lossy bits based on an approximate value of a number of remaining coding units, that is, an averaging stage, related to division, in a process of calculating the number of lossy bits may be implemented through a shift operation at both an encoder side and a decoder side, so that accuracy of the number of lossy bits is improved without increasing calculation complexity. This improves accuracy of a quantization parameter, and effectively improves image quality of a reconstructed image.

Step 710: Bit number of a binary non-zero most significant bit of a number of coding units

Step 720: Difference

Step 730: Adjustment value of a number of lossy bits of a current coding unit

Step 740: Determine the number of lossy bits based on an initial value of the number of lossy bits and the adjustment value of the number of lossy bits

FIG. 7

EP 4 564 815 A1

**Description**

This application claims priorities to Chinese Patent Application No. 202211097271.4, filed with the China National Intellectual Property Administration on September 8, 2022 and entitled "BIT RATE CONTROL METHOD AND APPARATUS", and to Chinese Patent Application No. 202211696812.5, filed with the China National Intellectual Property Administration on December 28, 2022 and entitled "IMAGE ENCODING AND DECODING METHOD AND APPARATUS, ENCODER, DECODER, AND SYSTEM", both of which are incorporated herein by reference in their entireties.

**TECHNICAL FIELD**

This application relates to the multimedia field, and in particular, to an image encoding and decoding method and apparatus, an encoder, a decoder, and a system.

**BACKGROUND**

Currently, an encoder performs encoding operations such as prediction, quantization, and entropy encoding on an image frame, to obtain a bitstream. A decoder performs decoding operations such as entropy decoding, dequantization, and prediction and reconstruction on the bitstream, to obtain a reconstructed image of the image frame. A larger value of a quantization parameter indicates less valid information in the image frame included in the bitstream, resulting in poor quality of the reconstructed image. On the contrary, a smaller value of the quantization parameter indicates higher quality of the reconstructed image, and therefore more redundant information of the image frame is included in the bitstream and a number of bits of the bitstream is larger. However, calculation complexity is increased when accuracy of the quantization parameter is improved. Therefore, when the quantization parameter used for encoding and decoding an image is determined, how to balance accuracy of the quantization parameter and calculation complexity while ensuring the quality of the reconstructed image by reducing a number of coded bits obtained by encoding the image is an urgent problem to be resolved.

**SUMMARY**

This application provides an image encoding and decoding method and apparatus, an encoder, a decoder, and a system, to balance accuracy of a quantization parameter and calculation complexity.

According to a first aspect, an image decoding method is provided. The method includes: obtaining a bitstream of a current coding unit in an image bitstream; determining an adjustment value of a number of lossy bits of the current coding unit based on a data storage status of a bitstream buffer and an approximate value of a number of to-be-decoded coding units, where the bitstream buffer is configured to store a bitstream or a partial bitstream of one or more coding units; and determining the number of lossy bits of the current coding unit based on an initial value of the number of lossy bits of the current coding unit and the adjustment value of the number of lossy bits of the current coding unit, where the number of lossy bits of the current coding unit is used to determine a quantization parameter used for decoding the bitstream of the current coding unit.

Therefore, the adjustment value of the number of lossy bits is determined based on an approximate value of a number of remaining coding units, that is, an averaging stage, related to division, in a process of calculating the number of lossy bits may be implemented through a shift operation at both an encoder side and a decoder side, so that accuracy of the number of lossy bits is improved without increasing calculation complexity. This improves accuracy of the quantization parameter, and effectively improves image quality of a reconstructed image.

In a possible implementation, the method further includes: decoding the bitstream of the current coding unit based on a first quantization parameter, to obtain a reconstructed image of the current coding unit.

According to a second aspect, an image encoding method is provided. The method includes: obtaining a current coding unit in a current frame; determining an adjustment value of a number of lossy bits of the current coding unit based on a data storage status of a bitstream buffer and an approximate value of a number of to-be-encoded coding units, where the bitstream buffer is configured to store a bitstream or a partial bitstream of one or more coding units; and determining the number of lossy bits of the current coding unit based on an initial value of the number of lossy bits of the current coding unit and the adjustment value of the number of lossy bits of the current coding unit, where the number of lossy bits of the current coding unit is used to determine a quantization parameter used for encoding the current coding unit.

In a possible implementation, the method further includes: the determining an adjustment value of a number of lossy bits of the current coding unit based on a data storage status of a bitstream buffer and an approximate value of a number of to-be-decoded coding units includes: determining a difference between an expected number of bits, at an end of decoding of a current frame, in the bitstream buffer and a number of bits of data in the bitstream buffer; and determining the adjustment value of the number of lossy bits of the current coding unit based on the difference and a binary most significant bit of the number of to-be-decoded coding units.

In a possible implementation, the method further includes: encoding the current coding unit based on the first quantization parameter, to obtain a bitstream of the current coding unit.

In a possible implementation, determining a number of lossless bits of the current coding unit based on a number of coded bits of a previous coding unit includes: determining the number of lossless bits of the current coding unit based on the number of coded bits of the previous coding unit and a second quantization parameter, where the previous coding unit is a coding unit decoded at a moment before a current moment, the second quantization parameter is used to decode a bitstream of the previous coding unit, and the number of lossless bits of the current coding unit is used to update a number of lossless bits corresponding to image content of the current coding unit.

In another possible implementation, the method further includes: determining, based on the number of coded bits of the previous coding unit, a number of bits of data in the bitstream buffer obtained by decoding the previous coding unit, where the bitstream buffer is configured to store the bitstream or the partial bitstream of the one or more coding units.

In another possible implementation, the method further includes: determining a number of lossless bits of the current coding unit based on image content of the current coding unit; determining the number of lossy bits of the current coding unit based on the number of bits of the data in the bitstream buffer obtained by decoding the previous coding unit; determining an information amount of the current coding unit based on the number of lossy bits of the current coding unit and an average number of lossless bits of the current coding unit, where the information amount indicates complexity of content that is expressed by the current coding unit and that is in content expressed by the current frame; determining a target number of bits of the current coding unit based on the number of lossless bits of the current coding unit and the information amount of the current coding unit, where the target number of bits of the current coding unit indicates an expected number of bits obtained by performing lossy coding on the current coding unit when the content of the current coding unit is referred to; and determining the first quantization parameter based on the target number of bits of the current coding unit.

According to a third aspect, an image encoding and decoding apparatus is provided. The apparatus includes modules configured to perform the method in any one of the first aspect or the possible designs of the first aspect, and modules configured to perform the method in any one of the second aspect or the possible designs of the second aspect.

According to a fourth aspect, an encoder is provided. The encoder includes at least one processor and a memory, and the memory is configured to store a computer program, so that when the computer program is executed by the at least one processor, the method in any one of the second aspect or the possible designs of the second aspect is implemented.

According to a fifth aspect, a decoder is provided. The decoder includes at least one processor and a memory, and the memory is configured to store a computer program, so that when the computer program is executed by the at least one processor, the method in any one of the first aspect or the possible designs of the first aspect is implemented.

According to a sixth aspect, an encoding and decoding system is provided. The encoding and decoding system includes the encoder in the fourth aspect and the decoder in the fifth aspect.

According to a seventh aspect, a chip is provided, including a processor and a power supply circuit, where the power supply circuit is configured to supply power to the processor, and the processor is configured to: perform operation steps of the method in any one of the first aspect or the possible implementations of the first aspect, and perform operation steps of the method in any one of the second aspect or the possible implementations of the second aspect.

According to an eighth aspect, a computer-readable storage medium is provided, including computer software instructions. When the computer software instructions are run in a computing device, the computing device is enabled to perform operation steps of the method in any one of the first aspect or the possible implementations of the first aspect and perform operation steps of the method in any one of the second aspect or the possible implementations of the second aspect.

According to a ninth aspect, a computer program product is provided. When the computer program product runs on a computer, a computing device is enabled to perform operation steps of the method in any one of the first aspect or the possible implementations of the first aspect and perform operation steps of the method in any one of the second aspect or the possible implementations of the second aspect.

Based on the implementations provided in the foregoing aspects, this application may provide more implementations through further combination.

## BRIEF DESCRIPTION OF DRAWINGS

FIG. 1 is a diagram of a structure of an encoding and decoding system according to this application;
FIG. 2 is a diagram of a scenario of an encoding and decoding system according to this application;
FIG. 3A and FIG. 3B are diagrams of structures of an encoder and a decoder according to this application;

FIG. 4A and FIG. 4B are a schematic flowchart of an image encoding and decoding method according to this application;

FIG. 5 is a schematic flowchart of an image encoding method according to this application;

FIG. 6 is a schematic flowchart of an image decoding method according to this application;

FIG. 7 is a diagram of a method for determining a number of lossy bits according to this application;

FIG. 8 is a diagram of a structure of an encoding and decoding apparatus according to this application; and

FIG. 9 is a diagram of a structure of an encoding and decoding system according to this application.

**DESCRIPTION OF EMBODIMENTS**

The technical solutions in this application are not only applicable to video coding standards (for example, standards such as H.264 and HEVC), but also applicable to future video coding standards (for example, an H.266 standard). Terms used in implementations of this application are only used to explain specific embodiments of this application, but are not intended to limit this application. The following first briefly describes some concepts that may be used in this application.

A **video** includes a plurality of consecutive images. According to the theory "persistence of vision", human eyes cannot differentiate single static images when the plurality of consecutive images change at more than 24 frames (frame) per second. In this case, the plurality of images that seem to be smooth and consecutive are the video.

**Video coding** indicates processing of a sequence of pictures that form a video or a video sequence. In the field of video coding, the terms "picture (picture)", "frame (frame)", or "image (image)" may be used as synonyms. Video coding used in this specification indicates video encoding or video decoding. Video encoding is performed at a source side, and typically includes processing (for example, compressing), under a condition that specific image quality is met, a raw video picture to reduce an amount of data required for representing the video picture, for more efficient storage and/or transmission. Video decoding is performed at a destination side, and typically includes inverse processing in comparison with processing of an encoder, to reconstruct the video picture. "Coding" of a video picture in embodiments should be understood as "encoding" or "decoding" of a video sequence. A combination of an encoding part and a decoding part is also referred to as coding (encoding and decoding). Video coding may also be referred to as image coding (image coding) or image compression (image compression). Image decoding (image decoding) is a reverse process of image encoding.

**A video sequence** includes a series of images (picture), an image is further partitioned into slices (slice), and the slice is further partitioned into blocks (block). In video coding, coding processing is performed per block. In some new video coding standards, a concept "block" is further extended. For example, a macroblock (macroblock, MB) is introduced in the H.264 standard. The macroblock may be further partitioned into a plurality of prediction blocks (partition) for predictive coding. In the high efficiency video coding (high efficiency video coding, HEVC) standard, a plurality of block units are obtained through classification based on functions according to basic concepts such as a coding unit (coding unit, CU), a prediction unit (prediction unit, PU), and a transform unit (transform unit, TU), and are described by using a new tree-based structure. For example, a CU may be partitioned into smaller CUs based on a quad-tree, and the smaller CU may continue to be partitioned, thereby forming a quad-tree structure. The CU is a basic unit for partitioning and coding a to-be-coded image. A PU and a TU also have a similar tree structure. The PU may correspond to a prediction block, and is a basic unit for predictive coding. The CU is further partitioned into a plurality of PUs in a partitioning mode. The TU may correspond to a transform block, and is a basic unit for transforming a prediction residual. However, all the CU, the PU, and the TU essentially belong to the concept of blocks (or referred to as coding units).

For example, in HEVC, a CTU is split into a plurality of CUs by using a quad-tree structure represented as a coding tree. A decision on whether to code a picture region through inter-picture (temporal) or intra-picture (spatial) prediction is made at a CU level. Each CU may be further split into one, two, or four PUs based on a PU splitting type. Inside one PU, a same prediction process is applied, and related information is transmitted to a decoder based on the PU. After a residual block is obtained by applying the prediction process based on the PU splitting type, the CU may be partitioned into transform units (transform unit, TU) based on another quad-tree structure similar to the coding tree used for the CU. In recent development of video compression technologies, a quad-tree and binary-tree (Quad-tree and binary tree, QTBT) partition frame is used to partition a coding block. In a QTBT block structure, a CU may have a square or rectangular shape.

In this specification, for ease of description and understanding, a to-be-coded coding unit in a current coded image may be referred to as a current block. For example, in encoding, the current block is a block currently being encoded, and in decoding, the current block is a block currently being decoded. A decoded coding unit that is in a reference image and that is used to predict the current block is referred to as a reference block. In other words, the reference block is a block that provides a reference signal for the current block, where the reference signal indicates a pixel value in the coding unit. A block that is in the reference image and that provides a prediction signal for the current block may be used as a prediction block, where the prediction signal indicates a pixel value, a sample value, or a sample signal in the prediction block. For example, an optimal reference block is found after a plurality of reference blocks are traversed, the optimal reference block provides prediction for the current block, and this block is referred to as a prediction block.

**Lossless video coding** means that a raw video picture may be reconstructed. In other words, a reconstructed video picture has same quality as the raw video picture (assuming that no transmission loss or other data loss occurs during storage or transmission).

**Lossy video coding** means that further compression is performed through, for example, quantization, to reduce a number of bits required for representing a video picture, and the video picture cannot be completely reconstructed at a decoder side. In other words, quality of a reconstructed video picture is lower or worse than that of the raw video picture.

**A bitstream (Data Rate)** is a binary stream generated by encoding an image or a video. The bitstream is also referred to as a data stream or a bit rate, that is, a number of bits transmitted in a unit time, and is an important part for image quality control in image coding. For images with same resolution, a larger bitstream of an image indicates a smaller compression ratio and better image quality.

**Bit rate control** is a function of adjusting a bit rate during encoding and decoding, and is abbreviated as rate control below. A bit rate control mode includes a constant bit rate (Constant Bit Rate, CBR) and a variable bit rate (Variable Bit Rate, VBR).

**A constant bit rate (Constant Bit Rate, CBR)** means that a stable bit rate is ensured within bit rate statistical time.

**A variable bit rate (Variable Bit Rate, VBR)** means that bit rate fluctuation is allowed within bit rate statistical time, to ensure stable quality of a coded image.

**Quantization** is a process of mapping consecutive values of a signal into a plurality of discrete amplitudes.

**A quantization parameter (quantization parameter, QP)** is used to: in an encoding process, quantize a residual value generated through a prediction operation or a coefficient generated through a transform operation; and in a decoding process, dequantize a syntax element, to obtain a residual value or a coefficient. The quantization parameter is a parameter used in a quantization process. Generally, a larger value of the quantization parameter indicates a more obvious quantization degree, poorer quality of a reconstructed image, and a lower bit rate. On the contrary, a smaller value of the quantization parameter indicates better quality of the reconstructed image and a higher bit rate.

**A bitstream buffer fullness** indicates a proportion of a number of bits of data in a bitstream buffer in a storage capacity of the bitstream buffer. At an encoder side, the number of bits of the data in the bitstream buffer includes a number of coded bits of a coding unit. At a decoder side, the number of bits of the data in the bitstream buffer includes a number of decoded bits of the coding unit.

**Clamping** is an operation of limiting a value within a specified range.

The following describes implementations of this application with reference to accompanying drawings.

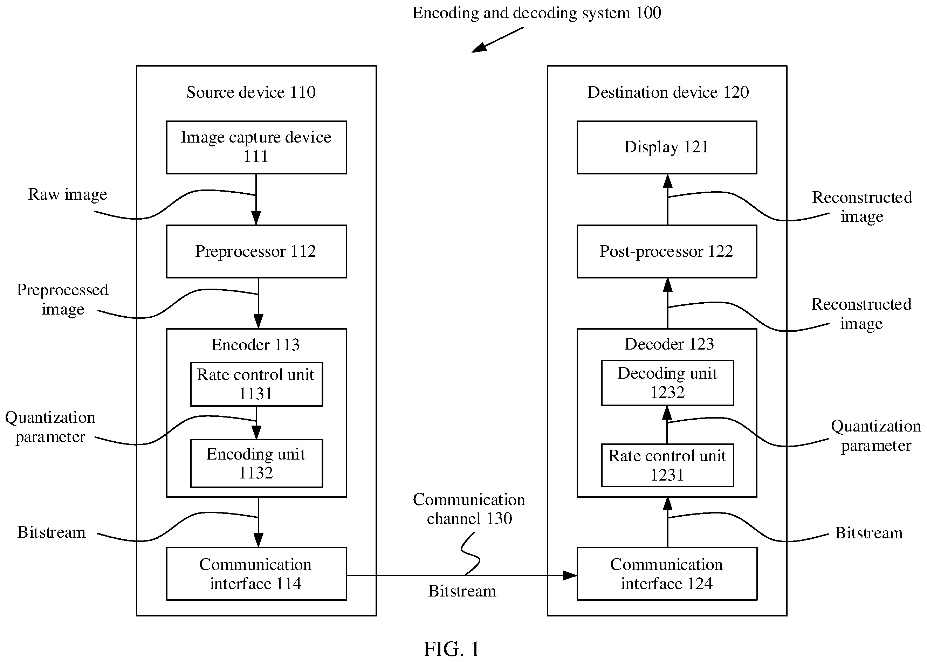

FIG. 1 is a diagram of a structure of an encoding and decoding system according to this application. The encoding and decoding system 100 includes a source device 110 and a destination device 120. The source device 110 is configured to: perform compression encoding on a video or an image, to obtain a bitstream, and transmit the bitstream to the destination device 120. The destination device 120 decodes the bitstream, reconstructs a video or an image, and displays a reconstructed image.

Specifically, the source device 110 includes an image capture device 111, a preprocessor 112, an encoder 113, and a communication interface 114.

The image capture device 111 is configured to obtain a raw image. The image capture device 111 may include or may be any type of image capture equipment configured to, for example, capture a real-world image, and/or any type of device for generating an image or comment (for screen content encoding, some text on a screen is also considered as a part of a to-be-encoded image or picture), for example, a computer graphics processor configured to generate a computer animation image, or any type of device configured to obtain and/or provide a real-world image or a computer animation image (for example, screen content or a virtual reality (virtual reality, VR) image), and/or any combination thereof (for example, an augmented reality (Augmented Reality, AR) image). The image capture device 111 may be a camera configured to capture an image or a memory configured to store an image. The image capture device 111 may further include any type of (internal or external) interface for storing a previously captured or generated image and/or obtaining or receiving an image. When the image capture device 111 is a camera, the image capture device 111 may be, for example, a local camera or an integrated camera integrated into the source device. When the image capture device 111 is a memory, the image capture device 111 may be a local memory or an integrated memory integrated into the source device. When the image capture device 111 includes an interface, the interface may be, for example, an external interface for receiving an image from an external video source. The external video source is, for example, external image capture equipment such as a camera, an external memory, or an external image generation device. The external image generation device is, for example, an external computer graphics processor, a computer, or a server. The interface may be any type of interface, for example, a wired or wireless interface or an optical interface, according to any proprietary or standardized interface protocol.

An image may be considered as a two-dimensional array or matrix of pixels (picture element). A pixel in the array may also be referred to as a sample. A number of samples in horizontal and vertical directions (or axes) of the array or the image defines a size and/or resolution of the image. For representation of a color, three color components are usually used.

To be specific, the image may be represented as or include three sample arrays. For example, in an RBG format or color space, an image includes corresponding red, green, and blue sample arrays. However, in video coding, each pixel is usually represented in a luminance/chrominance format or color space. For example, an image in a YUV format includes a luminance component indicated by Y (or indicated by L sometimes) and two chrominance components indicated by U and V. The luminance (luma) component Y represents luminance or gray level intensity (for example, both are the same in a gray-scale image), and the two chrominance (chroma) components U and V represent chrominance or color information components. Correspondingly, the image in the YUV format includes a luminance sample array of luminance sample values (Y) and two chrominance sample arrays of chrominance values (U and V). An image in an RGB format may be transformed or converted into an image in a YUV format and vice versa. This process is also referred to as color conversion or transform. If an image is monochrome, the image may include only a luminance sample array. In this application, an image transmitted by the image capture device 111 to the encoder 113 may also be referred to as raw image data.

The preprocessor 112 is configured to: receive the raw image captured by the image capture device 111, and preprocess the raw image, to obtain a preprocessed image. For example, preprocessing performed by the preprocessor 112 includes refinement, color format conversion (for example, conversion from an RGB format to a YUV format), color correction, or denoising.

The encoder 113 is configured to: receive the preprocessed image generated by the preprocessor 112, and perform compression encoding on the preprocessed image, to obtain the bitstream. For example, the encoder 113 may include a rate control unit 1131 and an encoding unit 1132. The rate control unit 1131 is configured to determine a quantization parameter used for encoding each coding unit in a current frame, so that the encoding unit 1132 predicts, quantizes, and encodes the preprocessed image based on the quantization parameter, to obtain the bitstream. The encoder 113 may determine a target number of bits based on image content of the coding unit and a number of bits of data in a bitstream buffer, and encode the coding unit based on the quantization parameter determined based on the target number of bits.

The communication interface 114 is configured to: receive the bitstream generated by the encoder 113, and send the bitstream to the destination device 120 through a communication channel 130, so that the destination device 120 reconstructs the raw image based on the bitstream.

The destination device 120 includes a display 121, a post-processor 122, a decoder 123, and a communication interface 124.

The communication interface 124 is configured to: receive the bitstream sent through the communication interface 114, and transmit the bitstream to the decoder 123, so that the decoder 123 reconstructs the raw image based on the bitstream.

The communication interface 114 and the communication interface 124 may be configured to transmit or receive related data of the raw image via a direct communication link between the source device 110 and the destination device 120, for example, a direct wired or wireless connection, or via any type of network, for example, a wired and wireless network or any combination thereof, or any type of private and public network or any combination thereof.

Both the communication interface 114 and the communication interface 124 may be configured as unidirectional communication interfaces indicated by the arrow that corresponds to the communication channel 130 and that points from the source device 110 to the destination device 120 in FIG. 1, or bidirectional communication interfaces; and may be configured to send and receive messages and the like, to set up a connection, acknowledge and exchange any other information related to the communication link and/or data transmission such as transmission of the bitstream obtained through encoding.

The decoder 123 is configured to: decode the bitstream, and reconstruct the raw image. For example, the decoder 123 performs entropy decoding, dequantization, prediction, and reconstruction on the bitstream, to obtain a reconstructed image. The decoder 123 may include a rate control unit 1231 and a decoding unit 1232. The rate control unit 1231 is configured to determine the quantization parameter used for decoding each coding unit in the current frame, so that the decoding unit 1232 performs decoding, dequantization, prediction, and reconstruction on the bitstream based on the quantization parameter, to obtain the reconstructed image. The decoder 123 may determine the target number of bits of the coding unit based on the image content of the coding unit and the number of bits of the data in the bitstream buffer, and decode the bitstream of the coding unit based on the quantization parameter determined based on the target number of bits.

The post-processor 122 is configured to: receive the reconstructed image generated by the decoder 123, and perform post-processing on the reconstructed image. For example, post-processing performed by the post-processor 122 includes color format conversion (for example, conversion from the YUV format to the RGB format), color correction, refinement or resampling, or any other processing.

The display 121 is configured to display the reconstructed image. The display 121 may be or may include any type of display device for presenting a reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, liquid crystal on silicon (liquid crystal on silicon, LCoS), a digital light processor (digital light processor, DLP), or any type of other display.

Both the encoder 113 and the decoder 123 may be implemented as any one of various appropriate circuits, for example, one or more microprocessors, digital signal processors (digital signal processor, DSP), application-specific integrated circuits (application-specific integrated circuit, ASIC), field-programmable gate arrays (field-programmable gate array, FPGA), discrete logic, hardware, or any combination thereof. If the technologies are implemented partially by using software, a device may store software instructions in an appropriate non-transitory computer-readable storage medium and may execute instructions by using hardware such as one or more processors, to perform the technologies of this disclosure. Any one of the foregoing content (including hardware, software, a combination of hardware and software, and the like) may be considered as one or more processors.

The image capture device 111 and the encoder 113 may be integrated into one physical device, or may be disposed on different physical devices. This is not limited. For example, the source device 110 shown in FIG. 1 includes the image capture device 111 and the encoder 113. It indicates that the image capture device 111 and the encoder 113 are integrated into one physical device. In this case, the source device 110 may also be referred to as capture equipment. For example, the source device 110 is a mobile phone, a tablet computer, a computer, a notebook computer, a video camera, a camera, a wearable device, a vehicle-mounted device, a terminal device, a virtual reality (virtual reality, VR) device, an augmented reality (Augmented Reality, AR) device, a mixed reality (Mixed Reality, MR) device, an extended reality (Extended Reality, XR) device, or other image capture equipment. If the source device 110 does not include the image capture device 111, it indicates that the image capture device 111 and the encoder 113 are two different physical devices, and the source device 110 may obtain the raw image from another device (for example, image capture equipment or an image storage device).

In addition, the display 121 and the decoder 123 may be integrated into one physical device, or may be disposed on different physical devices. This is not limited. For example, the destination device 120 shown in FIG. 1 includes the display 121 and the decoder 123. It indicates that the display 121 and the decoder 123 are integrated into one physical device. In this case, the destination device 120 may also be referred to as a playback device, and the destination device 120 has functions of decoding and displaying the reconstructed image. The destination device 120 is, for example, a display, a television set, a digital media player, a video game console, a vehicle-mounted computer, or another device for displaying an image. If the destination device 120 does not include the display 121, it indicates that the display 121 and the decoder 123 are two different physical devices. After decoding the bitstream to reconstruct the raw image, the destination device 120 transmits the reconstructed image to another display device (for example, a television set or a digital media player), and the another display device displays the reconstructed image.

In addition, FIG. 1 shows that the source device 110 and the destination device 120 may be integrated into one physical device, or may be disposed on different physical devices. This is not limited.

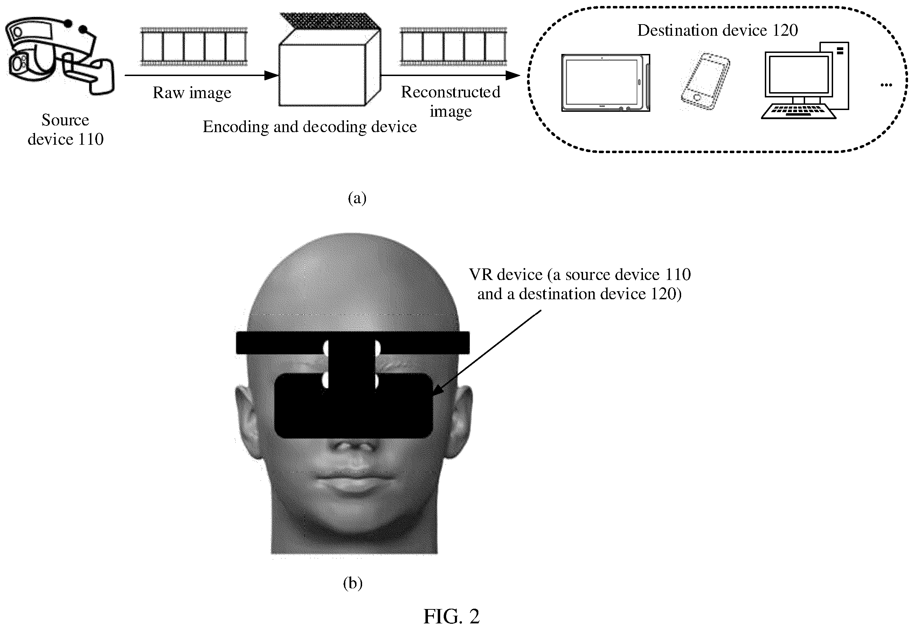

For example, as shown in (a) in FIG. 2, the source device 110 may be a camera lens, and the destination device 120 may be a display in various possible forms. The source device 110 may capture a video of a first scenario, and transmit a plurality of frames of raw images in the video to an encoding and decoding device. The encoding and decoding device encodes and decodes the raw image, to obtain a reconstructed image. The destination device 120 displays the reconstructed image, and plays the video.

For another example, as shown in (b) in FIG. 2, the source device 110 and the destination device 120 are integrated into a virtual reality (virtual reality, VR) device, an augmented reality (Augmented Reality, AR) device, a mixed reality (Mixed Reality, MR) device, or an extended reality (Extended Reality, XR) device, and the VR/AR/MR/XR device has functions of capturing a raw image, displaying a reconstructed image, and performing encoding and decoding. The source device 110 may capture an image of a real scenario in which a user is located, and the destination device 120 may display a reconstructed image of the real scenario in a virtual environment.

In these embodiments, the source device 110 or the corresponding function thereof and the destination device 120 or the corresponding function thereof may be implemented by same hardware and/or software or by separate hardware and/or software or any combination thereof. As will be apparent for a skilled person based on the description, the existence and division into the different units or functions in the source device 110 and/or the destination device 120 as shown in FIG. 1 may vary depending on an actual device and application.

The structure of the foregoing encoding and decoding system is merely an example for description. In some possible implementations, the encoding and decoding system may further include another device. For example, the encoding and decoding system may further include a device-side device or a cloud-side device. After capturing the raw image, the source device 110 preprocesses the raw image, to obtain the preprocessed image, and transmits the preprocessed image to the device-side device or the cloud-side device, and the device-side device or the cloud-side device implements functions of encoding and decoding the preprocessed image.

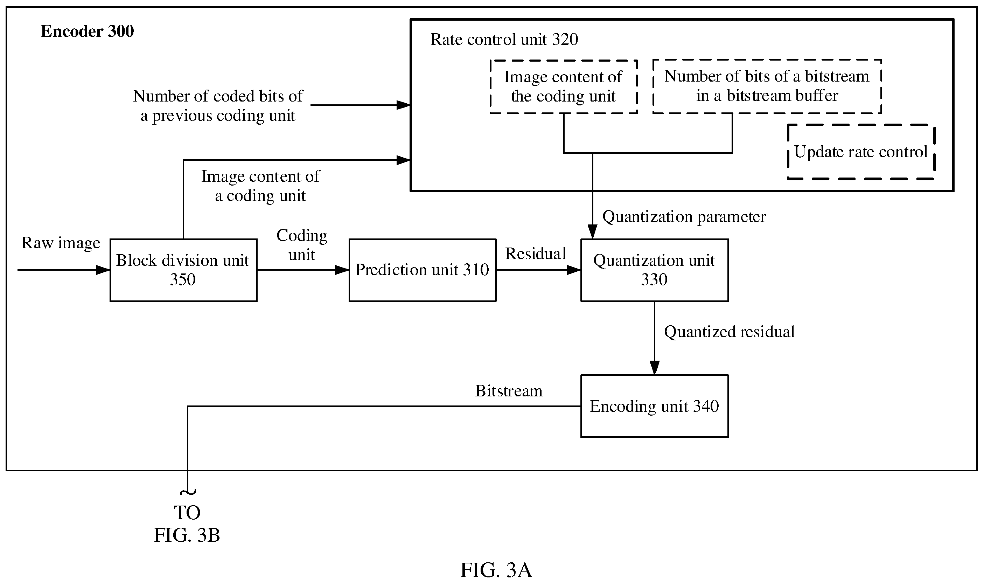

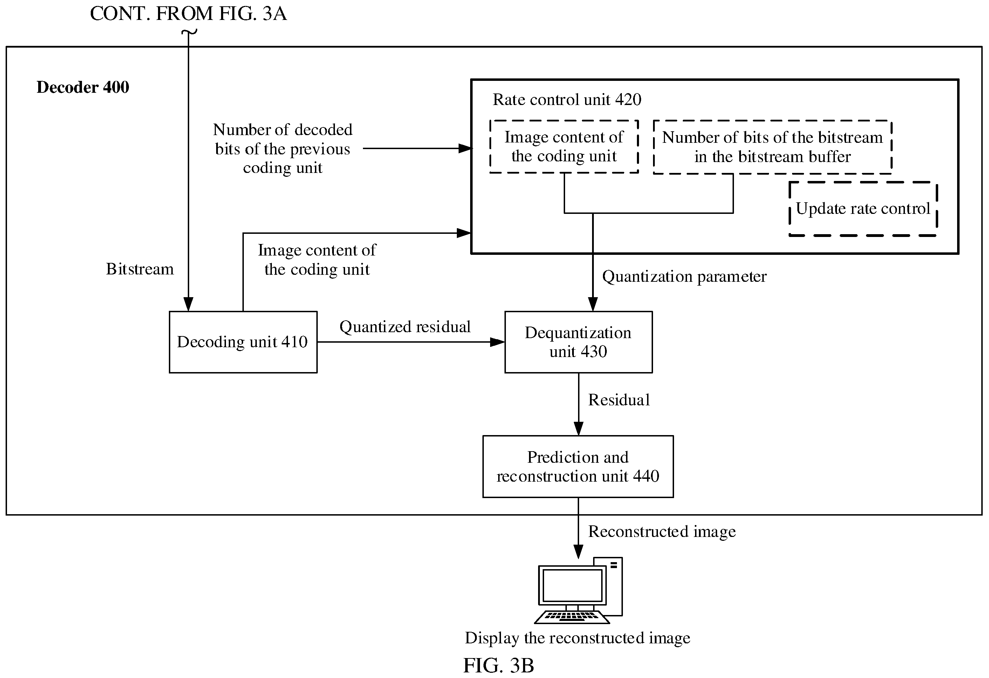

An image encoding and decoding method provided in this application is applied to an encoder side and a decoder side. Structures of an encoder and a decoder are described in detail with reference to FIG. 3A and FIG. 3B. As shown in FIG. 3A, the encoder 300 includes a prediction unit 310, a rate control unit 320, a quantization unit 330, an encoding unit 340, and a block division unit 350.

The block division unit 350 is configured to divide a raw image into a plurality of coding units.

The rate control unit 320 is configured to: determine a target number of bits of the coding unit based on image content of a current to-be-encoded coding unit output by the block division unit 350 and a number of bits of data in a bitstream buffer, and determine a quantization parameter based on the target number of bits.

In some embodiments, when the encoder 300 encodes a frame of image and then transmits a bitstream of the image frame to the decoder 400, the data in the bitstream buffer includes the bitstream of the image frame, and the number of bits of the data in the bitstream buffer includes a number of bits of the bitstream of the image frame.

In some other embodiments, when the encoder 300 encodes a coding unit in a frame of image and then transmits a bitstream of the coding unit to the decoder 400, the data in the bitstream buffer includes a bitstream of one or more coding units, and the number of bits of the data in the bitstream buffer includes a number of bits of the bitstream of the one or more coding units. It may be understood that the bitstream of the one or more coding units may be obtained by subtracting a bitstream of an encoded coding unit transmitted from the encoder 300 to the decoder 400 from a bitstream of a coding unit encoded by the encoder 300.

The prediction unit 310 is configured to: perform intra-frame prediction on the coding unit output by the block division unit 350, to obtain a predicted number of bits, and output a residual between an original number of bits of the coding unit and the predicted number of bits. For example, for an explanation of intra-frame prediction, refer to intra-frame prediction of HEVC. Intra-frame prediction is a common method for removing spatial redundant information from a raw image. To be specific, a reconstructed pixel of an adjacent coding block is used as a reference value to predict a current coding unit. This is equivalent to that a coding unit in the raw image is correlated with a coding block surrounding the coding unit. A pixel value of the current coding unit may be estimated based on a surrounding reconstructed coding unit. The estimated pixel value is a prediction value, and quantization and entropy encoding are performed on a residual between the prediction value and an original value of the current coding unit. A prediction residual is usually transmitted through encoding. At the decoder side, the same prediction process is performed, to obtain the prediction value of the current coding unit, and then the prediction value is added to the obtained residual, to obtain a reconstruction value of the current coding unit.

The quantization unit 330 is configured to quantize, based on the quantization parameter output by the rate control unit 320, the residual output by the prediction unit 310, to obtain a quantized residual.

The encoding unit 340 is configured to encode the quantized residual output by the quantization unit 330, to obtain the bitstream of the coding unit. For example, entropy encoding is performed on the quantized residual output by the quantization unit 330.

The rate control unit 320 further provides a rate control update function, that is, updates a number of lossless bits and an average number of lossless bits that correspond to the coding unit output by the block division unit 350. For example, the rate control unit 320 determines the number of lossless bits of the current coding unit based on a number of coded bits of a previous coding unit. For another example, the average number of lossless bits corresponding to the current coding unit is determined based on the number of coded bits of the previous coding unit. For another example, a number of bits of data in the bitstream buffer obtained by decoding the previous coding unit is updated based on the number of coded bits of the previous coding unit.

The structure of the decoder is described in detail with reference to FIG. 3B. As shown in FIG. 3B, the decoder 400 includes a decoding unit 410, a rate control unit 420, a dequantization unit 430, and a prediction and reconstruction unit 440.

The decoding unit 410 is configured to decode the bitstream of the coding unit, to obtain the quantized residual and the image content.

The rate control unit 420 determines the target number of bits of the coding unit based on the image content of the current to-be-decoded coding unit output by the decoding unit 410 and the number of bits of the data in the bitstream buffer, and determines the quantization parameter based on the target number of bits.

In some embodiments, when the encoder 300 encodes a frame of image and then transmits a bitstream of the image frame to the decoder 400, the data in the bitstream buffer of the decoder 400 includes decoded data of the image frame, and the number of bits of the data in the bitstream buffer includes a number of bits of the decoded data of the image frame.

In some other embodiments, when the encoder 300 encodes a coding unit in a frame of image and then transmits a bitstream of the coding unit to the decoder 400, the data in the bitstream buffer of the decoder 400 includes decoded data of one or more coding units, and the number of bits of the data in the bitstream buffer includes a number of bits of the decoded data of the one or more coding units.

The dequantization unit 430 is configured to perform, based on the quantization parameter output by the rate control unit 420, dequantization on the quantized residual output by the decoding unit 410, to obtain the residual.

The prediction and reconstruction unit 440 is configured to perform prediction and reconstruction on the residual output by the dequantization unit 430, to obtain a reconstructed image, so that a display displays the reconstructed image.

The rate control unit 420 further provides a rate control update function, that is, updates the number of lossless bits and the average number of lossless bits that correspond to the coding unit. For example, the rate control unit 420 determines the number of lossless bits of the current coding unit based on the number of coded bits of the previous coding unit. For another example, the average number of lossless bits of the current coding unit is determined based on the number of coded bits of the previous coding unit. For another example, the number of bits of the data in the bitstream buffer obtained by decoding the previous coding unit is updated based on the number of coded bits of the previous coding unit.

To resolve a problem of how to balance accuracy of a quantization parameter and calculation complexity when the quantization parameter used for encoding and decoding an image is determined to ensure quality of a reconstructed image, this application provides an image encoding and decoding method. An adjustment value of a number of lossy bits is determined based on an approximate value of a number of remaining coding units, that is, an averaging step, related to division, in a process of calculating the number of lossy bits may be implemented through a shift operation at both an encoder side and a decoder side, so that accuracy of the number of lossy bits is improved without increasing calculation complexity. This improves accuracy of the quantization parameter, and effectively improves image quality of a reconstructed image.

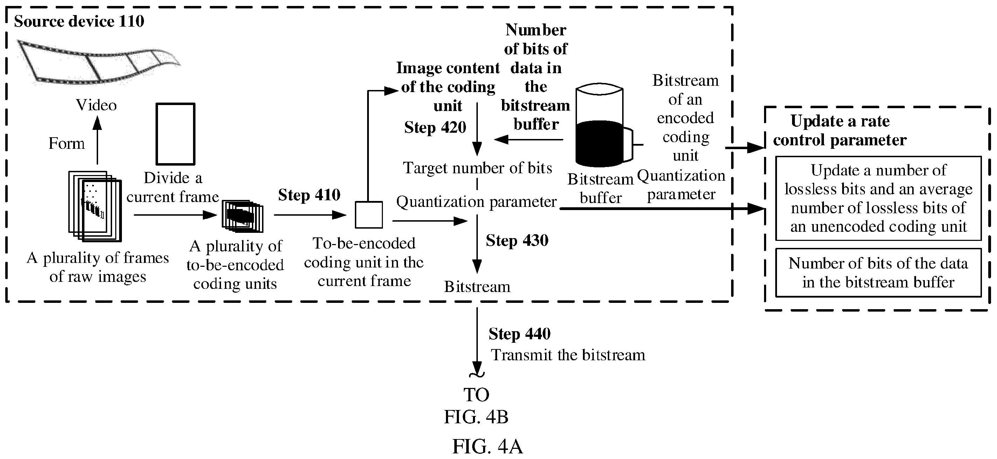

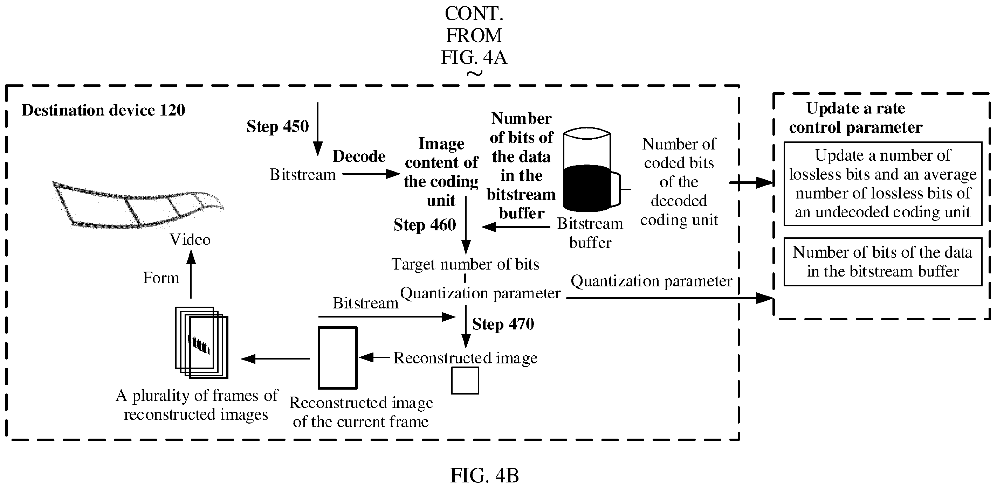

The following describes an image encoding and decoding process with reference to accompanying drawings. FIG. 4A and FIG. 4B are a schematic flowchart of an image encoding and decoding method according to this application. Herein, an example in which the source device 110 and the destination device 120 in FIG. 1 perform an image encoding and decoding process is used for description. As shown in FIG. 4A and FIG. 4B, the method includes the following steps.

**Step 410: The source device 110 obtains a to-be-encoded coding unit in a current frame.**

As described in the foregoing embodiment, if the source device 110 includes the image capture device 111, the source device 110 may capture a raw image via the image capture device 111. Optionally, the source device 110 may alternatively receive a raw image captured by another device, or obtain a raw image from a memory in the source device 110 or another memory. The raw image may include at least one of a real-world image captured in real time, an image stored in a device, and an image synthesized from a plurality of images. A manner of obtaining the raw image and a type of the raw image are not limited in this embodiment.

The current frame is the raw image or a frame of image, that is encoded or decoded at a current moment. A previous frame is the raw image or a frame of image, that is encoded or decoded at a moment before the current moment. The previous frame may be a frame at a moment that is one or more moments before the current moment. The current coding unit is a coding unit encoded or decoded at the current moment. A previous coding unit is a coding unit encoded or decoded at a moment before the current moment. The previous coding unit may be a coding unit at a moment that is one or more moments before the current moment.

The source device 110 may divide the current frame, to obtain a plurality of coding units, and encode the plurality of coding units.

**Step 420: The source device 110 determines a target number of bits based on image content of the coding unit and a number of bits of data in a bitstream buffer, and determines a quantization parameter based on the target number of bits.**

The image content of the coding unit indicates complexity of different pixel regions in the coding unit, for example, complexity of a color, a texture, a shape, and the like of the pixel region. In some embodiments, the encoder 113 divides the coding unit into several subblocks, and for each subblock, differences between adjacent pixel values are calculated step by step in a horizontal direction and a vertical direction. A complexity level corresponding to the subblock is obtained after absolute values of the differences are summed, and the complexity level is compared with a threshold, to obtain a complexity level of the subblock. After rule-based calculation is performed on the complexity level of each subblock, a complexity level k of the coding unit is obtained. Complexity levels of different coding units in the current frame may be different or may be the same.

The number of bits of the data in the bitstream buffer indicates a number of bits of a bitstream of an encoded coding unit in the current frame stored in the bitstream buffer. Before encoding, a physical buffer for storing a bitstream may be preconfigured in the memory. The bitstream buffer may be obtained based on a number of bits of a bitstream of an encoded coding unit stored in the physical buffer.

The source device 110 determines the target number of bits based on the number of bits of the data in the bitstream buffer and a complexity level indicated by the image content of the coding unit, and determines the quantization parameter based on the target number of bits. For a specific explanation of determining the quantization parameter, refer to descriptions of steps 510 to 560 below.

**Step 430: The source device 110 encodes the coding unit based on the quantization parameter, to obtain a bitstream of the coding unit.**

The source device 110 may perform an encoding operation such as transformation, quantization, or entropy encoding on the coding unit, to generate the bitstream, so as to implement data compression on the to-be-encoded coding unit. A number of bits of the bitstream of the coding unit may be less than or greater than the target number of bits. For a specific method for generating the bitstream, refer to the conventional technology and the description of the encoding unit 330 in the foregoing embodiment.

In addition, the source device 110 updates a number of lossless bits and an average number of lossless bits of an unencoded coding unit, and the number of bits of the data in the bitstream buffer. For a specific explanation of the updating process, refer to descriptions of steps 710 to 740 below.

**Step 440: The source device 110 sends the bitstream to the destination device 120.**

The source device 110 may send a bitstream of a video to the destination device 120 after encoding the entire video. Alternatively, the source device 110 may perform encoding processing on the raw image in real time on a per-frame basis, and send a bitstream of one frame after encoding the frame. Alternatively, the source device 110 performs encoding processing on a coding unit of the raw image, and sends a bitstream of the coding unit after encoding the coding unit. For a specific method for sending the bitstream, refer to the conventional technology and the descriptions of the communication interface 114 and the communication interface 124 in the foregoing embodiment.

**Step 450: The destination device 120 obtains the to-be-decoded bitstream of the coding unit in an image bitstream.**

**Step 460: The destination device 120 determines the target number of bits based on the image content of the coding unit and the number of bits of the data in the bitstream buffer, and determines the quantization parameter based on the target number of bits of the coding unit.**

After receiving the bitstream of the coding unit, the destination device 120 decodes the bitstream of the coding unit, to obtain the image content of the coding unit and encoded data of the coding unit, and then determines the quantization parameter based on the number of bits of the data in the bitstream buffer and the image content of the coding unit. The destination device 120 determines the target number of bits based on the number of bits of the data in the bitstream buffer and the complexity level indicated by the image content of the coding unit, and determines the quantization parameter based on the target number of bits. For a specific explanation of determining the quantization parameter, refer to descriptions of steps 510 to 560 below.

**Step 470: The destination device 120 decodes the bitstream of the coding unit in the current frame based on the quantization parameter, to obtain a reconstructed image.**

The destination device 120 decodes the encoded data of the coding unit based on the quantization parameter determined based on the target number of bits of the coding unit, to obtain the reconstructed image.

The destination device 120 displays the reconstructed image. Alternatively, the destination device 120 transmits the reconstructed image to another display device, and the another display device displays the reconstructed image.

In addition, the destination device 120 updates a number of lossless bits and an average number of lossless bits of an undecoded coding unit, and the number of bits of the data in the bitstream buffer. For a specific explanation of the updating process, refer to descriptions of steps 710 to 740 below.

Therefore, to obtain better encoding and decoding performance and quality of the reconstructed image, two factors: the number of bits of the data in the bitstream buffer and the image content of the coding unit are balanced, and the quantization parameter is dynamically set, so that a number of coded bits obtained by encoding the image is reduced while ensuring the quality of the reconstructed image.

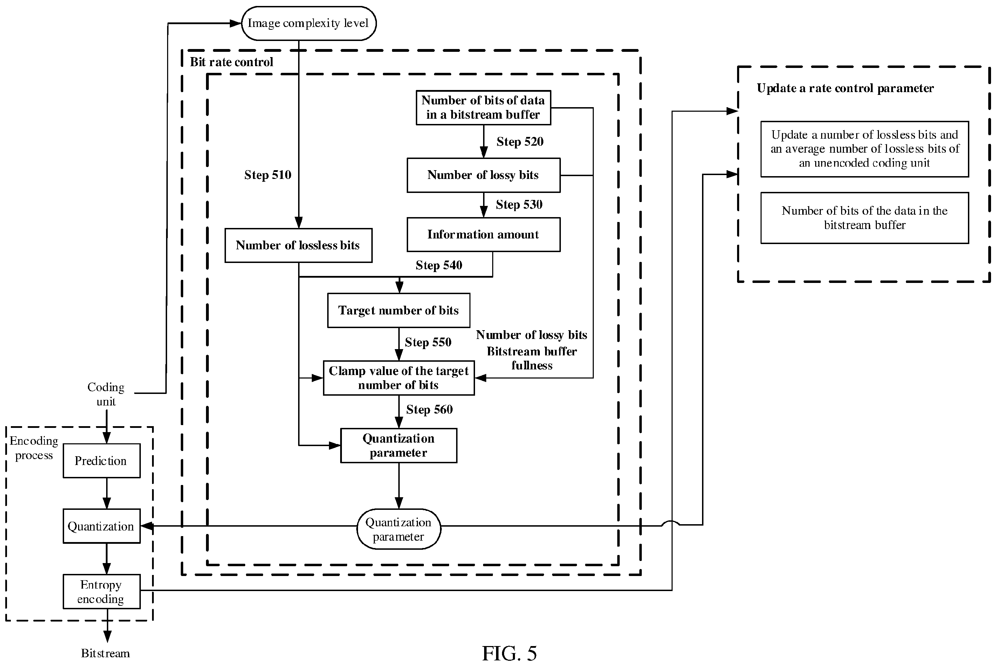

The following describes in detail a process of determining a quantization parameter with reference to accompanying drawings. FIG. 5 is a schematic flowchart of an image encoding method according to this application. Herein, an example in which the encoder 300 in FIG. 3A performs a process of determining a quantization parameter is used for description. A method procedure in FIG. 5 is a description of a specific operation process included in step 420 in FIG. 4A and step 460 in FIG. 4B. As shown in FIG. 5, the method includes the following steps.

**Step 510: The encoder 300 determines a number of lossless bits of a coding unit based on image content of the coding unit.**

The image content of the coding unit indicates complexity of different pixel regions in the coding unit. The encoder 300 may determine a complexity level of the coding unit based on the image content of the coding unit, for example, as described in step 420. The number of lossless bits of the coding unit indicates an expected number of bits obtained by performing lossless coding on the coding unit.

In some embodiments, when the coding unit is a $1^{st}$ coding unit, that needs to be encoded, in a current frame, the number of lossless bits may be a default value configured based on experience. In some other embodiments, when the coding unit is a $2^{nd}$ coding unit or a subsequent unit, that needs to be encoded, in a current frame, the encoder 300 sets, based on a number of coded bits of the coding unit, an expected number of bits obtained by performing lossless coding on an unencoded coding unit. The encoder 300 may perform table lookup based on an identifier of the coding unit and the complexity level of the coding unit, to determine the number of lossless bits of the coding unit. It is assumed that $B_{LL}$ indicates the number of lossless bits. $B_{LL}=Record_{BLL}[T][k]$, where T indicates the identifier of the coding unit, and k indicates the complexity level of the coding unit.

**Step 520: The encoder 300 determines a number of lossy bits of the coding unit based on a number of bits of data in a bitstream buffer.**

The number of lossy bits of the coding unit indicates an expected number of bits obtained by performing lossy coding on the coding unit when the content of the coding unit is not referred to.

The encoder 300 determines an adjustment value of the number of lossy bits based on a number of bits of an encoded coding unit in the bitstream buffer. Further, the encoder 300 determines the number of lossy bits based on an initial value of the number of lossy bits and the adjustment value of the number of lossy bits. The number of lossy bits satisfies the following formula (1):

$$Bpp = Bpp_{INI} + Bpp_{ADJ} \quad \text{Formula (1)}$$

Herein, Bpp indicates the number of lossy bits, $Bpp_{INI}$ indicates the initial value of the number of lossy bits, and $Bpp_{ADJ}$ indicates the adjustment value of the number of lossy bits. The initial value of the number of lossy bits is determined and obtained based on a number of bits of the coding unit and a compression ratio. The compression ratio is determined based on a requirement of an actual application scenario.

The adjustment value of the number of lossy bits is in direct proportion to $(RcBuf_{END} - RcBuf_T)$. $RcBuf_{END}$ indicates an expected number of bits in the bitstream buffer at an end of encoding or decoding of the current frame. $RcBuf_T$ indicates the number of bits of the encoded coding unit in the bitstream buffer. If a difference of $RcBuf_{END} - RcBuf_T$ is greater than 0, it indicates that the number of bits of the encoded coding unit in the bitstream buffer does not exceed the expected number of bits in the bitstream buffer at the end of encoding or decoding of the current frame, and a larger target number of bits may be allocated to the unencoded coding unit. If a difference of $RcBuf_{END} - RcBuf_T$ is less than 0, it indicates that the number of bits of the encoded coding unit in the bitstream buffer exceeds the expected number of bits in the bitstream buffer at the end of encoding or decoding of the current frame, and a smaller target number of bits may be allocated to the unencoded coding unit. If a difference of $RcBuf_{END} - RcBuf_T$ is equal to 0, it indicates that the number of bits of the encoded coding unit in the bitstream buffer is equal to the expected number of bits in the bitstream buffer at the end of encoding or decoding of the current frame, and a smaller target number of bits may be allocated to the unencoded coding unit. For the adjustment value of the number of lossy bits of the coding unit, refer to the descriptions of steps 710 to step 740 below.

The number of bits of the encoded coding unit in the bitstream buffer is obtained by linearly mapping a number of bits of an encoded coding unit in a physical buffer. For example, $RcBuf_T = PhyBuf_T + X_0$, where $PhyBuf_T$ indicates the number of bits of the encoded coding unit in the physical buffer, and the physical buffer is storage space, for storing a bitstream of an encoded coding unit, in a memory. A storage capacity of the physical buffer may be a number of bits of a bitstream of one or more coding units. $X_0$ indicates an agreed parameter.

Different coding units in the current frame correspond to same $RcBuf_{END}$. Coding units in different frames may correspond to same or different $RcBuf_{END}$.

**Step 530: The encoder 300 determines an information amount based on the number of lossy bits and an average number of lossless bits.**

The information amount indicates a proportion of information of a current to-be-encoded coding unit in information of the current frame, that is, complexity of content that is expressed by the coding unit and that is in content expressed by the current frame. For example, the information amount is a ratio of the number of lossy bits to the average number of lossless bits. The average number of lossless bits indicates an expected number of bits obtained by performing lossless coding on the current frame. The average number of lossless bits may be an average expected number of bits obtained by performing lossless coding on all coding units in the current frame. For example, the current frame includes a coding unit 1 and a coding unit 2, an expected number of bits obtained by performing lossless coding on the coding unit 1 is 10 bits, an expected number of bits obtained by performing lossless coding on the coding unit 2 is 20 bits, and an average number of lossless bits of the current frame is 15 bits.

In some embodiments, when the coding unit is the 1st coding unit, that needs to be encoded, in the current frame, the average number of lossless bits may be a default value configured based on experience. In some other embodiments, when the coding unit is the 2nd coding unit or the subsequent unit, that needs to be encoded, in the current frame, the encoder 300 sets, based on the number of coded bits of the coding unit, a corresponding average expected number of bits obtained by performing lossless coding on the unencoded coding unit. The encoder 300 may perform table lookup based on the identifier of the coding unit, to determine the average number of lossless bits of the coding unit. It is assumed that $B_{AVG}$ represents the average number of lossless bits, and $B_{AVG} = Record_{BAVG}[n]$, where $Record_{BAVG}[n]$ represents an average number of lossless bits at an $n$th location.

The information amount indicates the complexity level of the coding unit. The information amount satisfies the following formula (2):

$$R = (Bpp * InvTab[X_3 * B_{AVG} - bitsOffset - 1] + X_4) * X_5 \quad \text{Formula (2)}$$

Herein, R indicates the information amount, Bpp indicates the number of lossy bits, $B_{AVG}$ indicates the average number of lossless bits, bitsOffset indicates an offset, $bitsOffset = BitsOffset - X1 * Bpp + X_2$, and BitsOffset indicates an initial value of the offset. The initial value of the offset is related to a bit depth of the image. $X_1$, $X_2$, $X_3$, $X_4$, and $X_5$ indicate agreed

parameters.

**Step 540: The encoder 300 determines the target number of bits based on the number of lossless bits and the information amount of the coding unit.**

The target number of bits indicates an expected number of bits obtained by performing lossy coding on the coding unit when the content of the coding unit is referred to, namely, an expected number of bits obtained by performing quantization and encoding on the coding unit by the encoder 300 when the content of the coding unit is referred to.

A larger number of lossy bits indicates a larger target number of bits, and a smaller number of lossy bits indicates a smaller target number of bits. The target number of bits satisfies the following formula (3):

$$B_{TGT}=(R*(B_{LL}-bitsOffset)+X_6)*X_7 \quad \text{Formula (3)}$$

Herein, $B_{TGT}$ indicates the target number of bits, R indicates the information amount, $B_{LL}$ indicates the number of lossless bits, bits Offset indicates the offset, and $X_6$ and $X_7$ are agreed parameters.

**Step 550: The encoder 300 clamps the target number of bits based on at least one of the number of lossy bits, the number of lossless bits, and a bitstream buffer fullness, to obtain a clamp value of the target number of bits.**

The encoder 300 determines a minimum value $B_{MIN}$ of the target number of bits and a maximum value $B_{MAX}$ of the target number of bits based on the number of lossy bits Bpp, the number of lossless bits $B_{LL}$, and the bitstream buffer fullness F, and then clamps the target number of bits $B_{TGT}$ based on the minimum value $B_{MIN}$ of the target number of bits and the maximum value $B_{MAX}$ of the target number of bits, to obtain the clamp value $B'_{TGT}$ of the target number of bits. The clamp value of the target number of bits satisfies the following formula (4):

$$B'_{TGT}=MIN(MAX(B_{MIN},B_{TGT}),B_{MAX}) \quad \text{Formula (4)}$$

For example, if $B_{MIN}>B_{TGT}$ and $B_{MIN}<B_{MAX}$, the target number of bits is $B_{MIN}$. For another example, if $B_{MIN}>B_{TGT}$ and $B_{MIN}>B_{MAX}$, the target number of bits is $B_{MAX}$. For another example, if $B_{MIN}<B_{TGT}$ and $B_{TGT}<B_{MAX}$, the target number of bits is $B_{TGT}$.

The bitstream buffer fullness indicates a storage status of the bitstream of the encoded coding unit in the bitstream buffer. The bitstream buffer fullness satisfies the following formula (5):

$$F=RcBuf_T/RcBuf_{MAX} \quad \text{Formula (5)}$$

Herein, F indicates the bitstream buffer fullness, $RcBuf_T$ indicates the number of bits of the encoded coding unit in the bitstream buffer, and $RcBuf_{MAX}$ indicates an allowed maximum number of bits in the bitstream buffer. If the bitstream buffer fullness is high, the expected number of bits obtained by performing lossy coding on the coding unit when the content of the coding unit is referred to is reduced, to reduce a number of bits in the physical buffer, so as to maintain the number of bits in the physical buffer.

**Step 560: The encoder 300 determines the quantization parameter based on the number of lossless bits and the clamp value of the target number of bits.**

After clamping the expected number of bits obtained by performing quantization and encoding on the coding unit when the content of the coding unit is referred to, the encoder 300 determines the quantization parameter based on the number of lossless bits and the clamp value of the target number of bits. The quantization parameter satisfies a formula (6):

$$QP=(B_{LL}-B'_{TGT}+X_8)*X_9)*X_{10} \quad \text{Formula (6)}$$

Herein, $B_{LL}$ indicates the number of lossless bits, $B'_{TGT}$ indicates the clamp value of the target number of bits, and $X_8$, $X_9$, and $X_{10}$ are agreed parameters.

It may be understood that the encoder determines, based on complexity of the current to-be-encoded coding unit relative to that of an entire frame of image, an expected value obtained by encoding the coding unit, that is, obtains the expected value through derivation based on the complexity level of the coding unit and an average complexity level of the entire frame. Therefore, to obtain better encoding performance and quality of a reconstructed image, different expected numbers of bits obtained through encoding are allocated to different coding units in the image via a rate control module, to maximize a specified total number of coded bits and achieve optimal quality of a decompressed image as much as possible.

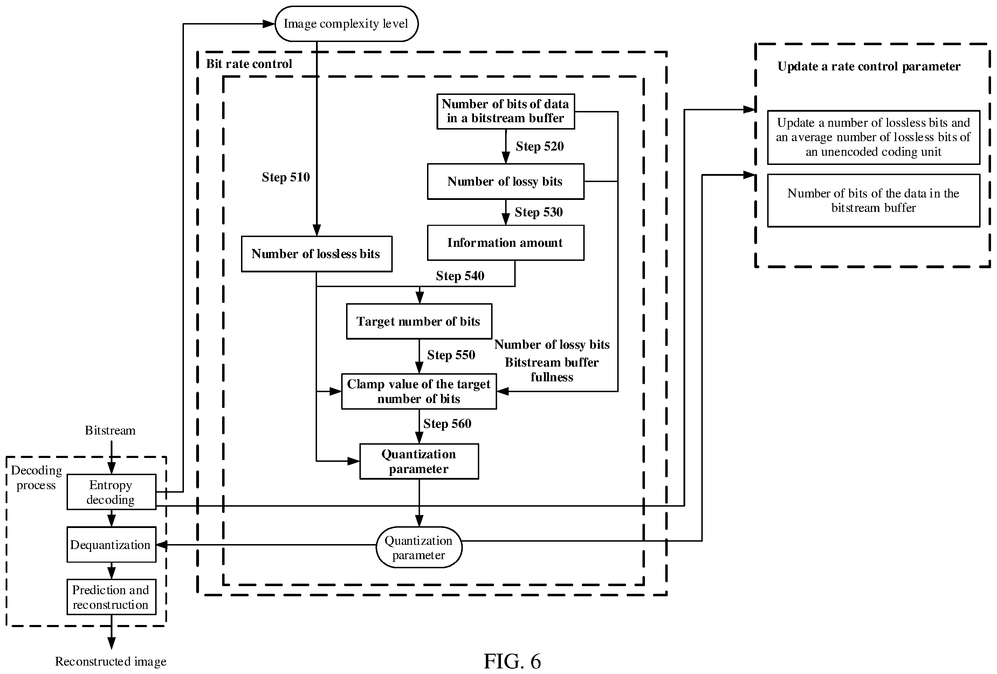

FIG. 6 is a schematic flowchart of bit rate control in a decoding process. A difference between FIG. 6 and FIG. 5 lies in that a quantization parameter output during bit rate control is used in a dequantization process. For a process of determining the quantization parameter, refer to the foregoing explanation in FIG. 5.

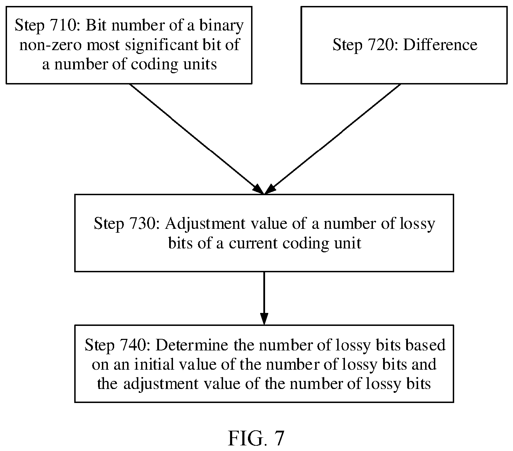

The following describes a method for obtaining a number of lossy bits of a current coding unit. In some embodiments, the encoder 300 determines a difference between an expected number of bits, at an end of decoding of a current frame, in a bitstream buffer and a number of bits of an encoded coding unit in the bitstream buffer, and determines an adjustment value of the number of lossy bits of the current coding unit based on the difference and a bit number of a binary non-zero most significant bit of a number of to-be-encoded coding units. As shown in FIG. 7, a method for obtaining a number of lossy bits includes the following steps.

**Step 710: The encoder 300 determines a bit number of a binary non-zero most significant bit of a number of to-be-encoded coding units.**

The number of to-be-encoded coding units indicates a number of unencoded coding units in a current frame. An approximate value of the number of to-be-encoded coding units is approximately represented by a power of 2 of the number. For example, the number of to-be-encoded coding units is 9, and the approximate value of the number of to-be-encoded coding units is $2^3$. For example, the number of to-be-encoded coding units is 17, and the approximate value of the number of to-be-encoded coding units is $2^4$. The bit number of the binary non-zero most significant bit of the number of to-be-encoded coding units indicates a power of the power of 2. It is assumed that the bit number of the binary non-zero most significant bit of the number of to-be-encoded coding units is s.

In some embodiments, if the encoder 300 has not encoded a coding unit in the current frame, it indicates that a current coding unit is a 1st coding unit, that needs to be encoded, in the current frame, and a value of s may be a power of a power of 2 of a number of all coding units in the current frame. The value of s is an initial bit number.

In some other embodiments, if the encoder 300 has encoded a coding unit in the current frame, a value of s may be a power of a power of 2 of a number of remaining unencoded coding units in the current frame. The value of s is a value obtained by updating the initial bit number via i-1 coding units.

**Step 720: The encoder 300 determines a difference between an expected number of bits, at an end of decoding of the current frame, in a bitstream buffer and a number of bits of an encoded coding unit in the bitstream buffer.**

The difference may be a value of $RcBuf_{END}$-$RcBuf_T$ as described in step 520 above.

**Step 730: The encoder 300 determines an adjustment value of a number of lossy bits of the current coding unit based on the difference and the bit number of the binary non-zero most significant bit of the number of to-be-encoded coding units.**

The encoder 300 determines the adjustment value of the number of lossy bits of the current coding unit based on a result obtained by dividing the difference by the bit number of the binary non-zero most significant bit of the number of to-be-encoded coding units. The adjustment value of the number of lossy bits of the coding unit satisfies a formula (7).

$$Bpp_{ADJ}=D>>s \text{ Formula (7)}$$

Herein, D indicates the difference, s indicates the bit number s in step 710, and >> indicates a right shift operation.

**Step 740: The encoder 300 determines the number of lossy bits based on an initial value of the number of lossy bits and the adjustment value of the number of lossy bits.**

The encoder 300 determines the number of lossy bits based on a sum of the initial value of the number of lossy bits and the adjustment value of the number of lossy bits. The number of lossy bits satisfies a formula (1) as described in step 520 above.

After encoding the coding unit, the encoder 300 updates the number of unencoded coding units in the current frame, for example, updates a current number of remaining coding units $Block_{remain}$ to $Block_{remain}$-1.

In addition, when the updated current number of remaining coding units $Block_{remain}$-1 is less than a power of 2 of an approximate value of the unupdated current number of remaining coding units $Block_{remain}$, s is updated to s-1. This avoids a case in which accuracy of the adjustment value of the number of lossy bits is reduced because an actual number of remaining coding units is less than a power of 2. On the contrary, when the updated current number of remaining coding units $Block_{remain}$-1 is greater than or equal to the power of 2 of the approximate value of the unupdated current number of remaining coding units $Block_{remain}$, the bit number s remains unchanged.

Optionally, the encoder 300 may further set a bit number update flag. For example, when the updated current number of remaining coding units $Block_{remain}$-1 is less than the power of 2 of the approximate value of the unupdated current number of remaining coding units $Block_{remain}$, the bit number update flag is 0, and it indicates to update the bit number, that is, Blocks=1<<s, where s indicates the bit number, and << indicates a left shift operation. When the updated current number of remaining coding units $Block_{remain}$-1 is greater than or equal to the power of 2 of the approximate value of the unupdated current number of remaining coding units $Block_{remain}$, the bit number update flag is 1, and it indicates not to update the bit number. In this case, the bit number s remains unchanged.

The foregoing embodiment describes the process of determining the number of lossy bits when the coding unit is encoded. For a process of determining the number of lossy bits when the coding unit is decoded, refer to the foregoing description. A difference lies in that a number of to-be-decoded coding units indicates a number of undecoded coding units in the current frame.

Therefore, the adjustment value of the number of lossy bits is determined based on the approximate value of the number of remaining coding units, so that accuracy of the number of lossy bits is improved without increasing calculation complexity. This improves accuracy of the quantization parameter.

It may be understood that, to implement the functions in the foregoing embodiments, the encoder and the decoder include a corresponding hardware structure and/or software module for performing each function. A person skilled in the art should easily be aware that, in combination with the units and method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

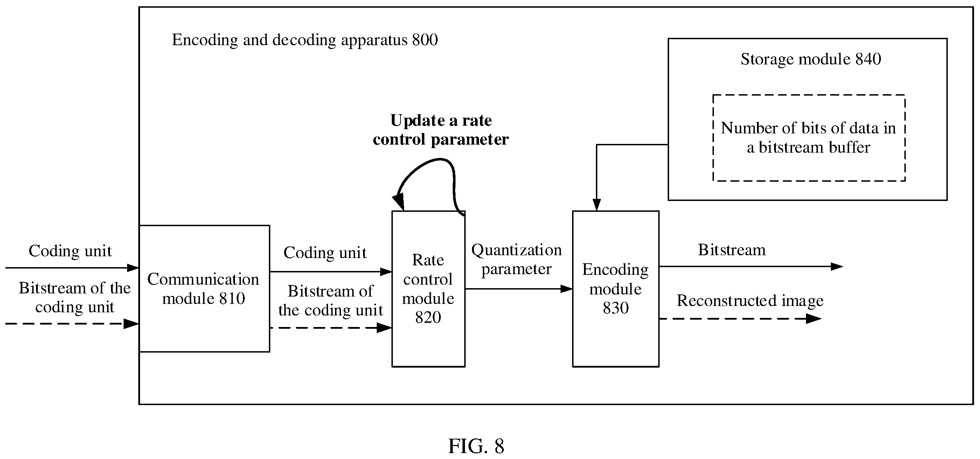

With reference to FIG. 1 to FIG. 7, the foregoing describes in detail the image encoding and decoding method provided in embodiments, and with reference to FIG. 8, the following describes an encoding and decoding apparatus provided in embodiments.

FIG. 8 is a diagram of a possible structure of an encoding and decoding apparatus according to an embodiment. These encoding and decoding apparatuses may be configured to implement functions of the encoder and the decoder in the foregoing method embodiments, and therefore can also achieve beneficial effect of the foregoing method embodiments. In this embodiment, the encoding and decoding apparatus may be the encoder 300 and the decoder 400 shown in FIG. 3A and FIG. 3B, or may be a module (for example, a chip) used in a computing device.

As shown in FIG. 8, the encoding and decoding apparatus 800 includes a communication module 810, a rate control module 820, an encoding module 830, and a storage module 840. The encoding and decoding apparatus 800 is configured to implement functions of the encoder 300 and the decoder 400 in the method embodiment shown in FIG. 3A and FIG. 3B.

When the encoding and decoding apparatus 800 is configured to implement the functions of the encoder 300, specific functions of the modules are as follows:

The communication module 810 is configured to obtain a to-be-encoded coding unit in a current frame. For example, the communication module 810 is configured to perform step 410 in FIG. 4A.

The rate control module 820 is configured to: determine a target number of bits of the coding unit based on image content of the coding unit and a number of bits of data in a bitstream buffer, and determine a quantization parameter based on the target number of bits of the coding unit. For example, the rate control module 820 is configured to perform step 420 in FIG. 4A.

The encoding module 830 is configured to encode the coding unit based on the quantization parameter, to obtain a bitstream of the coding unit. For example, the encoding module 830 is configured to perform step 430 in FIG. 4A.

When the encoding and decoding apparatus 800 is configured to implement the functions of the decoder 400, specific functions of the modules are as follows:

The communication module 810 is configured to obtain the to-be-decoded bitstream of the coding unit in an image bitstream. For example, the communication module 810 is configured to perform step 450 in FIG. 4B.

The rate control module 820 is configured to: determine the target number of bits of the coding unit based on the image content of the coding unit and the number of bits of the data in the bitstream buffer, and determine the quantization parameter based on the target number of bits of the coding unit. For example, the rate control module 820 is configured to perform step 460 in FIG. 4B.

The encoding module 830 is configured to decode the bitstream of the coding unit based on the quantization parameter, to obtain a reconstructed image of the coding unit. For example, the encoding module 830 is configured to perform step 470 in FIG. 4B.

The rate control module 820 is further configured to: determine a number of lossless bits of the current coding unit based on a number of coded bits of a previous coding unit, and determine an average number of lossless bits of the current coding unit based on the number of coded bits of the previous coding unit. For example, the rate control module 820 is configured to perform step 710 to step 740 in FIG. 7.

The storage module 840 is configured to store the number of bits of the data in the bitstream buffer, so that the rate control module 820 determines the quantization parameter.

It should be understood that the encoding and decoding apparatus 800 in this embodiment of this application may be implemented through an application-specific integrated circuit (application-specific integrated circuit, ASIC) or a programmable logic device (programmable logic device, PLD). The PLD may be a complex programmable logic device (complex programmable logical device, CPLD), a field-programmable gate array (field-programmable gate array, FPGA), generic array logic (generic array logic, GAL), or any combination thereof. Alternatively, when the method shown in FIG. 3A and FIG. 3B may be implemented by software, the modules of the encoding and decoding apparatus may be software modules, and the modules of the encoding and decoding apparatus 800 may be software modules.

The encoding and decoding apparatus 800 according to this embodiment of this application may correspondingly perform the methods described in embodiments of this application. In addition, the foregoing and other operations and/or functions of the units in the encoding and decoding apparatus 800 are respectively used to implement corresponding procedure of the method in FIG. 3A and FIG. 3B. For brevity, details are not described herein again.

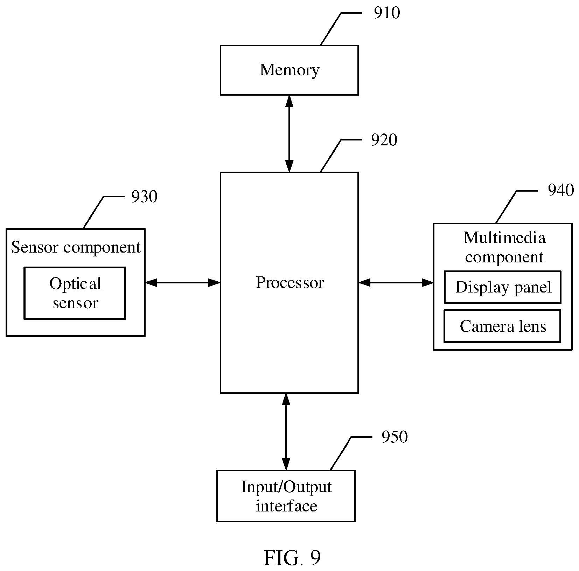

FIG. 9 is a diagram of a structure of an image processing system according to this application. The image processing system is described by using a mobile phone as an example. The mobile phone or a chip system built in the mobile phone includes a memory 910, a processor 920, a sensor component 930, a multimedia component 940, and an input/output interface 950. With reference to FIG. 9, the following describes in detail each component of the mobile phone or the chip system built in the mobile phone.

The memory 910 may be configured to store data, a software program, and a module, and mainly includes a program storage region and a data storage region. The program storage region may store a software program that includes an instruction formed by code, including but not limited to an operating system and an application program required by at least one function, such as a sound playing function or an image playing function. The data storage region may store data created based on use of the mobile phone, such as audio data, image data, and a phone book. In this embodiment of this application, the memory 910 may be configured to store a number of bits of data in a bitstream buffer. In some feasible embodiments, there may be one or more memories. The memory may include a floppy disk, a hard disk such as a built-in hard disk or a removable hard disk, a magnetic disk, a compact disc, a magneto-optical disk such as a CD_ROM or a DCD_ROM, a nonvolatile storage device such as a RAM, a ROM, a PROM, an EPROM, an EEPROM, or a flash memory, or any other form of storage medium well-known in the art.

As a control center of the mobile phone, the processor 920 connects all parts of the entire device through various interfaces and lines, and performs various functions of the mobile phone and processes data by running or executing a software program and/or a software module that are/is stored in the memory 910 and by invoking data stored in the memory 910, to perform overall monitoring on the mobile phone. In this embodiment of this application, the processor 920 may be configured to perform one or more steps in the method embodiments of this application. For example, the processor 920 may be configured to perform one or more of step 420 to step 470 in the following method embodiments. In some feasible embodiments, the processor 920 may be a single-processor structure, a multi-processor structure, a single-thread processor, a multi-thread processor, or the like. In some feasible embodiments, the processor 920 may include at least one of a central processing unit, a general-purpose processor, a digital signal processor, a neural network processor, an image processing unit, an image signal processor, a microcontroller, a microprocessor, or the like. In addition, the processor 920 may further include another hardware circuit or an accelerator, such as an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor 920 may be a combination of processors implementing a computing function, for example, a combination including one or more microprocessors, or a combination of a digital signal processor and a microprocessor.

The sensor component 930 includes one or more sensors, and is configured to provide status evaluation in various aspects for the mobile phone. The sensor component 930 may include an optical sensor, for example, a CMOS or CCD image sensor, for use in an imaging application, that is, become a component of a camera or a camera lens. In this embodiment of this application, the sensor component 930 may be configured to support a camera lens in the multimedia component 940 in obtaining an image and the like. In addition, the sensor component 930 may further include an acceleration sensor, a gyroscope sensor, a magnetic sensor, a pressure sensor, or a temperature sensor. The sensor component 930 may detect acceleration/deceleration, an orientation, and an on/off state of the mobile phone, a relative location of the component, or a temperature change of the mobile phone.

The multimedia component 940 provides a screen of an output interface between the mobile phone and a user. The screen may be a touch panel, and when the screen is a touch panel, the screen may be implemented as a touchscreen, to receive an input signal from the user. The touch panel includes one or more touch sensors to sense a touch, sliding, and a gesture on the touch panel. The touch sensor not only can sense a boundary of a touch or sliding action, but also can detect duration and pressure that are associated with the touch or sliding operation. In addition, the multimedia component 940 further includes at least one camera lens. For example, the multimedia component 940 includes a front-facing camera and/or a rear-facing camera. When the mobile phone is in an operating mode, such as a shooting mode or a video mode, the front-facing camera and/or the rear-facing camera may sense an external multimedia signal, and the signal is used to form an image frame. The front-facing camera and the rear-facing camera each may be a fixed optical lens system or have a focal length and an optical zooming capability.

The input/output interface 950 provides an interface between the processor 920 and a peripheral interface module. For example, the peripheral interface module may include a keyboard, a mouse, or a USB (universal serial bus) device. In a possible implementation, the input/output interface 950 may have only one input/output interface, or may have a plurality of input/output interfaces.

Although not shown, the mobile phone may further include an audio component, a communication component, and the like. For example, the audio component includes a microphone, and the communication component includes a wireless fidelity (wireless fidelity, Wi-Fi) module, a Bluetooth module, and the like. Details are not described herein in

## EP 4 564 815 A1

embodiments of this application.

The foregoing image processing system may be a general-purpose device or a dedicated device. For example, the image processing system may be an edge device (for example, a box carrying a chip having a processing capability). Optionally, the image processing system may alternatively be a server or another device having a computing capability.

It should be understood that the image processing system according to this embodiment may correspond to the encoding and decoding apparatus 800 in embodiments, and may correspond to a corresponding entity that performs any method in FIG. 3A and FIG. 3B. In addition, the foregoing and other operations and/or functions of the modules in the encoding and decoding apparatus 800 are respectively used to implement corresponding procedure of the method in FIG. 3A and FIG. 3B. For brevity, details are not described herein again.

The method steps in embodiments may be implemented in a hardware manner, or may be implemented by executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be disposed in a computing device. Certainly, the processor and the storage medium may alternatively exist in the computing device as discrete components.

All or some of the foregoing embodiments may be implemented by software, hardware, firmware, or any combination thereof. When the software is used for implementation, all or some of the foregoing embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An image decoding method, comprising:

   obtaining a bitstream of a current coding unit in an image bitstream;
   determining an adjustment value of a number of lossy bits of the current coding unit based on a data storage status of a bitstream buffer and an approximate value of a number of to-be-decoded coding units, wherein the bitstream buffer is configured to store a bitstream or a partial bitstream of one or more coding units; and
   determining the number of lossy bits of the current coding unit based on an initial value of the number of lossy bits of the current coding unit and the adjustment value of the number of lossy bits of the current coding unit, wherein the number of lossy bits of the current coding unit is used to determine a quantization parameter used for decoding the bitstream of the current coding unit.

2. The method according to claim 1, wherein the determining an adjustment value of a number of lossy bits of the current coding unit based on a data storage status of a bitstream buffer and an approximate value of a number of to-be-decoded coding units comprises:

   determining a difference between an expected number of bits, at an end of decoding of a current frame, in the bitstream buffer and a number of bits of data in the bitstream buffer; and
determining the adjustment value of the number of lossy bits of the current coding unit based on the difference and a bit number of a binary non-zero most significant bit of the number of to-be-decoded coding units.

3. The method according to claim 1 or 2, wherein the method further comprises:

determining a number of lossless bits of the current coding unit based on image content of the current coding unit;
determining an information amount of the current coding unit based on the number of lossy bits of the current coding unit and an average number of lossless bits of the current coding unit, wherein the information amount indicates complexity of content that is expressed by the current coding unit and that is in content expressed by the current frame;
determining a target number of bits of the current coding unit based on the number of lossless bits of the current coding unit and the information amount of the current coding unit, wherein the target number of bits of the current coding unit indicates an expected number of bits obtained by performing lossy coding on the current coding unit when the content of the current coding unit is referred to; and
determining the quantization parameter based on the target number of bits of the current coding unit.

4. The method according to any one of claims 1 to 3, wherein the method further comprises:
decoding the bitstream of the current coding unit based on the quantization parameter, to obtain a reconstructed image of the current coding unit.

5. The method according to claim 4, wherein the method further comprises:

obtaining a number of coded bits of a previous coding unit in the current frame, wherein the current coding unit is a coding unit decoded at a current moment, and the previous coding unit is a coding unit decoded at a moment before the current moment; and
determining the number of lossless bits of the current coding unit based on the number of coded bits of the previous coding unit, and determining the average number of lossless bits of the current coding unit based on the number of coded bits of the previous coding unit, wherein
the number of lossless bits of the current coding unit indicates an expected number of bits obtained by performing lossless coding on the current coding unit;
the average number of lossless bits of the current coding unit indicates an expected number of bits obtained by performing lossless coding on the current frame; and
the number of lossless bits of the current coding unit and the average number of lossless bits of the current coding unit are used to determine the quantization parameter used for decoding the bitstream of the current coding unit.

6. The method according to claim 4 or 5, wherein the method further comprises:
determining, based on the number of coded bits of the previous coding unit, a number of bits of data in the bitstream buffer obtained by decoding the previous coding unit, wherein the bitstream buffer is configured to store the bitstream or the partial bitstream of the one or more coding units.

7. An image encoding method, comprising:

obtaining a current coding unit in a current frame;
determining an adjustment value of a number of lossy bits of the current coding unit based on a data storage status of a bitstream buffer and an approximate value of a number of to-be-encoded coding units; and
determining the number of lossy bits of the coding unit based on an initial value of the number of lossy bits of the coding unit and the adjustment value of the number of lossy bits of the coding unit, wherein the number of lossy bits of the coding unit is used to determine a quantization parameter used for encoding the current coding unit.

8. The method according to claim 7, wherein the determining an adjustment value of a number of lossy bits of the current coding unit based on a data storage status of a bitstream buffer and an approximate value of a number of to-be-decoded coding units comprises:

determining a difference between an expected number of bits, at an end of decoding of a current frame, in the bitstream buffer and a number of bits of data in the bitstream buffer; and
determining the adjustment value of the number of lossy bits of the current coding unit based on the difference and a binary most significant bit of the number of to-be-decoded coding units.

9. The method according to claim 7 or 8, wherein the method comprises:

   determining a number of lossless bits of the current coding unit based on image content of the current coding unit;
   determining an information amount of the current coding unit based on the number of lossy bits of the current coding unit and an average number of lossless bits of the current coding unit, wherein the information amount indicates complexity of content that is expressed by the current coding unit and that is in content expressed by the current frame;
   determining a target number of bits of the current coding unit based on the number of lossless bits of the current coding unit and the information amount of the current coding unit, wherein the target number of bits of the current coding unit indicates an expected number of bits obtained by performing lossy coding on the current coding unit when the content of the current coding unit is referred to; and
   determining the quantization parameter based on the target number of bits of the current coding unit.

10. The method according to any one of claims 7 to 9, wherein the method further comprises:
    encoding the current coding unit based on the quantization parameter, to obtain a bitstream of the current coding unit.

11. The method according to claim 10, wherein the method further comprises:

    obtaining a number of coded bits of a previous coding unit in the current frame, wherein the current coding unit is a coding unit encoded at a current moment, and the previous coding unit is a coding unit encoded at a moment before the current moment; and
    determining the number of lossless bits of the current coding unit based on the number of coded bits of the previous coding unit, and determining the average number of lossless bits of the current coding unit based on the number of coded bits of the previous coding unit, wherein
    the number of lossless bits of the current coding unit indicates an expected number of bits obtained by performing lossless coding on the current coding unit;
    the average number of lossless bits of the current coding unit indicates an expected number of bits obtained by performing lossless coding on the current frame; and
    the number of lossless bits of the current coding unit and the average number of lossless bits of the current coding unit are used to determine the quantization parameter used for encoding the current coding unit.

12. The method according to claim 10 or 11, wherein the method further comprises:
    determining, based on the number of coded bits of the previous coding unit, a number of bits of data in the bitstream buffer obtained by decoding the previous coding unit, wherein the bitstream buffer is configured to store a bitstream or a partial bitstream of one or more coding units.

13. An encoding and decoding apparatus, wherein the encoding and decoding apparatus is configured to perform the method according to any one of claims 1 to 12.

14. A decoder, wherein the encoder comprises at least one processor and a memory, and the memory is configured to store a computer program, so that when the computer program is executed by the at least one processor, the method according to any one of claims 1 to 6 is implemented.

15. An encoder, wherein the encoder comprises at least one processor and a memory, and the memory is configured to store a computer program, so that when the computer program is executed by the at least one processor, the method according to any one of claims 7 to 12 is implemented.

16. An encoding and decoding system, wherein the encoding and decoding system comprises the encoder according to claim 15 and the decoder according to claim 14, the encoder is configured to perform operation steps of the method according to any one of claims 7 to 12, and the decoder is configured to perform the method according to any one of claims 1 to 6.

Encoding and decoding system 100

FIG. 1

Source device 110 → Raw image → Encoding and decoding device → Reconstructed image → Destination device 120

(a)

VR device (a source device 110 and a destination device 120)

(b)

FIG. 2

**Encoder 300**

FIG. 3A

TO
FIG. 3B

EP 4 564 815 A1

**Decoder 400**

Rate control unit 420

Number of decoded
bits of the previous
coding unit

Image content of
the coding unit

Number of bits of the bitstream
in the bitstream buffer

Update rate control

Image content of
the coding unit

Bitstream

Quantization parameter

Decoding unit 410

Quantized residual

Dequantization
unit 430

Residual

Prediction and
reconstruction unit 440

Reconstructed image

Display the reconstructed image

FIG. 3B

EP 4 564 815 A1

**Source device 110**

Video

Form

A plurality of frames of raw images

Divide a current frame

A plurality of to-be-encoded coding units

**Step 410**

To-be-encoded coding unit in the current frame

**Image content of the coding unit**

**Step 420**

**Number of bits of data in the bitstream buffer**

Target number of bits

Quantization parameter

**Step 430**

Bitstream

Bitstream buffer

**Bitstream of an encoded coding unit**

Quantization parameter

**Update a rate control parameter**

Update a number of lossless bits and an average number of lossless bits of an unencoded coding unit

Number of bits of the data in the bitstream buffer

**Step 440**

Transmit the bitstream

TO
FIG. 4B

FIG. 4A

CONT.
FROM
FIG. 4A

FIG. 4B

Image complexity level

**Bit rate control**

**Number of bits of data
in a bitstream buffer**

Step 520

**Number of lossy bits**

Step 530

**Number of lossless bits**

Step 510

**Information amount**

Step 540

**Target number of bits**

Step 550

Number of lossy bits
Bitstream buffer
fullness

**Clamp value of the target
number of bits**

Step 560

**Quantization
parameter**

Coding
unit

Encoding
process

Prediction

Quantization

Entropy
encoding

Bitstream

Quantization
parameter

**Update a rate control parameter**

Update a number of lossless bits and
an average number of lossless bits of
an unencoded coding unit

Number of bits of the data in the
bitstream buffer

EP 4 564 815 A1

FIG. 5

EP 4 564 815 A1

Image complexity level

**Bit rate control**

**Number of bits of data in a bitstream buffer**

**Step 520**

**Step 510**

**Number of lossy bits**

**Step 530**

**Number of lossless bits**

**Information amount**

**Step 540**

**Target number of bits**

**Number of lossy bits**
**Bitstream buffer fullness**

**Step 550**

**Clamp value of the target number of bits**

**Step 560**

**Quantization parameter**

Bitstream

Decoding process

Entropy decoding

Dequantization

Quantization parameter

Prediction and reconstruction

Reconstructed image

**Update a rate control parameter**

Update a number of lossless bits and an average number of lossless bits of an unencoded coding unit

Number of bits of the data in the bitstream buffer

FIG. 6

Step 710: Bit number of a binary
non-zero most significant bit of
a number of coding units

Step 720: Difference

Step 730: Adjustment value of a number of lossy
bits of a current coding unit

Step 740: Determine the number of lossy bits based
on an initial value of the number of lossy bits and
the adjustment value of the number of lossy bits

FIG. 7

FIG. 8

910

Memory

920

930

Sensor component

Optical
sensor

Processor

940

Multimedia
component

Display panel

Camera lens

950

Input/Output
interface

FIG. 9

## INTERNATIONAL SEARCH REPORT

| International application No. |
| --- |
| **PCT/CN2023/105332** |

**A. CLASSIFICATION OF SUBJECT MATTER**

H04N19/124(2014.01)i; H04N19/14(2014.01)i; H04N19/182(2014.01)i

According to International Patent Classification (IPC) or to both national classification and IPC

**B. FIELDS SEARCHED**

Minimum documentation searched (classification system followed by classification symbols)

IPC:H04N19/-

Documentation searched other than minimum documentation to the extent that such documents are included in the fields searched

Electronic data base consulted during the international search (name of data base and, where practicable, search terms used)

CNABS, CNTXT, ENTXT, EPTXT, USTXT, VEN, WOTXT, CNKI, IEEE, ISI: 华为, 有损, 比特, 量化, 参数, 步长, 数量, 数目, 个数, 总数, 比特数, 缓冲, 缓存, 编码块, 编码单元, QP, quantity, quantization, parameter, step, number, amount, loss, bit, buffer, cache, CU, coding unit, block

**C. DOCUMENTS CONSIDERED TO BE RELEVANT**

| Category* | Citation of document, with indication, where appropriate, of the relevant passages | Relevant to claim No. |
| --- | --- | --- |
| A | CN 113132726 A (SHANGHAI HISILICON TECHNOLOGY CO., LTD.) 16 July 2021 (2021-07-16) <br> description, paragraphs 71-73, 95-96, and 199-204, and figures 1-3 | 1-16 |
| A | CN 104135629 A (IMAGINATION TECHNOLOGIES LTD.) 05 November 2014 (2014-11-05) <br> entire document | 1-16 |
| A | CN 108702513 A (QUALCOMM INC.) 23 October 2018 (2018-10-23) <br> entire document | 1-16 |
| A | CN 112738516 A (ZHEJIANG HUACHUANG VIDEO SIGNAL TECHNOLOGY CO., LTD.) 30 April 2021 (2021-04-30) <br> entire document | 1-16 |
| A | CN 1146264 A (MOTOROLA INC.) 26 March 1997 (1997-03-26) <br> entire document | 1-16 |
| A | US 9374615 B2 (TUT SYSTEMS INC. et al.) 21 June 2016 (2016-06-21) <br> entire document | 1-16 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 September 2023** | **21 September 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/105332**

| Patent document cited in search report | | | Publication date (day/month/year) | Patent family member(s) | | | Publication date (day/month/year) |
|---|---|---|---|---|---|---|---|
| CN | 113132726 | A | 16 July 2021 | CN | 113132726 | B | 29 July 2022 |
| CN | 104135629 | A | 05 November 2014 | DE | 102014006433 | A1 | 06 November 2014 |
| | | | | GB | 201308073 | D0 | 12 June 2013 |
| | | | | DE | 102014006442 | A1 | 06 November 2014 |
| | | | | US | 2014369621 | A1 | 18 December 2014 |
| | | | | US | 9525869 | B2 | 20 December 2016 |
| | | | | US | 2015023411 | A1 | 22 January 2015 |
| | | | | US | 9525870 | B2 | 20 December 2016 |
| | | | | GB | 201406016 | D0 | 21 May 2014 |
| | | | | GB | 2515158 | A | 17 December 2014 |
| | | | | GB | 2515158 | B | 20 May 2015 |
| | | | | GB | 201320987 | D0 | 15 January 2014 |
| | | | | GB | 201316816 | D0 | 06 November 2013 |
| | | | | GB | 2513932 | A | 12 November 2014 |
| | | | | GB | 2513932 | B | 25 March 2015 |
| | | | | CN | 104135629 | B | 01 January 2019 |
| CN | 108702513 | A | 23 October 2018 | EP | 3434017 | A1 | 30 January 2019 |
| | | | | WO | 2017165529 | A1 | 28 September 2017 |
| | | | | CA | 3014931 | A1 | 28 September 2017 |
| | | | | JP | 2019512970 | A | 16 May 2019 |
| | | | | KR | 20180122354 | A | 12 November 2018 |
| | | | | BR | 112018069086 | A2 | 22 January 2019 |
| | | | | US | 2017280139 | A1 | 28 September 2017 |
| | | | | TW | 201737708 | A | 16 October 2017 |
| | | | | TWI | 743098 | B | 21 October 2021 |
| | | | | CN | 108702513 | B | 07 June 2022 |
| CN | 112738516 | A | 30 April 2021 | CN | 112738516 | B | 09 July 2021 |
| CN | 1146264 | A | 26 March 1997 | CA | 2185704 | A1 | 29 August 1996 |
| | | | | CA | 2185704 | C | 01 August 2000 |
| | | | | WO | 9626596 | A1 | 29 August 1996 |
| | | | | US | 5677969 | A | 14 October 1997 |
| | | | | AU | 4520296 | A | 11 September 1996 |
| | | | | AU | 678927 | B2 | 12 June 1997 |
| | | | | EP | 0758510 | A1 | 19 February 1997 |
| | | | | EP | 0758510 | A4 | 02 May 1997 |
| US | 9374615 | B2 | 21 June 2016 | US | 2012027082 | A1 | 02 February 2012 |
| | | | | US | 2006126728 | A1 | 15 June 2006 |
| | | | | US | 8054880 | B2 | 08 November 2011 |
| | | | | WO | 2006065477 | A2 | 22 June 2006 |
| | | | | EP | 1820281 | A2 | 22 August 2007 |
| | | | | EP | 1820281 | A4 | 03 June 2009 |
| | | | | EP | 1820281 | B1 | 13 September 2017 |
| | | | | WO | 2006065477 | A3 | 04 January 2007 |
| | | | | CA | 2590920 | A1 | 22 June 2006 |
| | | | | CA | 2590920 | C | 01 May 2018 |
| | | | | JP | 2008523720 | A | 03 July 2008 |
| | | | | JP | 5236947 | B2 | 17 July 2013 |
| | | | | JP | 2012182816 | A | 20 September 2012 |
| | | | | JP | 2014014148 | A | 23 January 2014 |

Form PCT/ISA/210 (patent family annex) (July 2022)

INTERNATIONAL SEARCH REPORT
Information on patent family members

International application No.

**PCT/CN2023/105332**

| Patent document cited in search report | Publication date (day/month/year) | Patent family member(s) | | Publication date (day/month/year) |
|---|---|---|---|---|
| | | JP | 5410566 B2 | 05 February 2014 |
| | | KR | 20070120937 A | 26 December 2007 |
| | | KR | 101228192 B1 | 30 January 2013 |
| | | IN | 2336KOLNP2007 A | 17 August 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211097271

- CN 202211696812